# EUROPEAN PATENT APPLICATION

(11) **EP 4 745 588 A1**
(43) Date of publication of application: **20.05.2026**
(21) Application number: 25814249.6
(22) Date of filing: 06.03.2025
(51) Int. Cl.: G01R 31/28, G01R 31/317, G06F 21/71

(54) **FUNCTIONAL SAFETY TEST METHOD, SYSTEM AND APPARATUS FOR INTEGRATED CIRCUIT, AND STORAGE MEDIUM**

(30) Priority: 31.05.2024 CN 202410707778
(71) Applicant: Horizon Journey (Shanghai) Technology Co., Ltd., Shanghai 201306 (CN)
(72) Inventor: XU, Jinling, Shanghai 201306 (CN)
(74) Representative: Casalonga
(86) International application number: PCT/CN2025/081130
(87) International publication number: WO 2025/246525

(57) **Abstract**

Disclosed are a functional safety testing method, system, and apparatus for an integrated circuit, and a storage medium, relating to the technical field of functional safety. The method includes: determining a consistency test result for first test data output by a first to-be-tested unit in a first logic circuit and second test data output by a corresponding second to-be-tested unit in a second logic circuit; determining current test coverage of the integrated circuit based on the consistency test result; adjusting the first to-be-tested unit and the second to-be-tested unit in response to that the current test coverage and target test coverage do not meet a preset numerical relationship; and determining a target integrated circuit corresponding to the target test coverage based on an obtained first target logic circuit and an obtained second target logic circuit. According to technical solutions of this disclosure, the target integrated circuit is obtained by adjusting a first test unit in the first logic circuit and a second test unit in the second logic circuit. In this case, a design is relatively simple, which can effectively save human development costs.

## Description

### CROSS-REFERENCE TO RELATED APPLICATION

This disclosure claims the priority to the Chinese patent application No. 202410707778.X, filed on May 31, 2024 and entitled "FUNCTIONAL SAFETY TESTING METHOD, SYSTEM, AND APPARATUS FOR INTEGRATED CIRCUIT, AND STORAGE MEDIUM", which is incorporated herein by references in its entirety.

### FIELD OF THE INVENTION

This disclosure relates to the technical field of functional safety (FuSa), and in particular, to a functional safety testing method, system, and apparatus for an integrated circuit, and a storage medium.

### BACKGROUND OF THE INVENTION

Currently, in FuSa security protection of an in-vehicle integrated circuit (such as an in-vehicle system on chip (SOC) or a neural network processor), a Dual core scheme has become a necessary protection scheme for FuSa security protection due to applicability thereof to all logic circuits in the integrated circuit.

However, the Dual core scheme requires to replicate an entire to-be-protected logic circuit, so as to test the entire to-be-protected logic circuit (test coverage of functional safety testing reaches 100%). To be specific, the Dual core scheme requires twice circuit area to implement functional safety testing for a single circuit, resulting in significant area overhead. To reduce the area overhead, when the Dual core scheme is adopted for performing functional safety testing on an integrated circuit with a low safety level requirement (for example, target test coverage of the functional safety testing is less than 100%), a plurality of replicated logic units (which may be, in some examples, obtained by replicating to-be-tested units in original logic circuits) corresponding to the target test coverage may be added to a to-be-protected original logic circuit by means of redesigning the integrated circuit, so as to obtain a target integrated circuit with the target test coverage. However, a process of redesigning the integrated circuit requires repeated design iterations and trade-offs to determine the plurality of replicated logic units corresponding to the target test coverage, which consumes a huge amount of human resources with high development costs.

### SUMMARY OF THE INVENTION

Usually, when a Dual core scheme is adopted for performing functional safety testing on an integrated circuit with a low safety level requirement, it is needed to repeatedly redesign a to-be-protected logic circuit in the integrated circuit, resulting in high human development costs.

To resolve the foregoing technical problem, this disclosure provides a testing method for an integrated circuit. The integrated circuit includes a first logic circuit and a second logic circuit for performing functional safety testing on the first logic circuit. The method includes:
determining at least one first to-be-tested unit in the first logic circuit and a second to-be-tested unit corresponding to the first to-be-tested unit in the second logic circuit;
performing functional safety testing on the first logic circuit and the second logic circuit, to obtain a consistency test result for first test data output by the first to-be-tested unit and second test data output by the corresponding second to-be-tested unit;
determining current test coverage of the integrated circuit based on the consistency test result;
adjusting the first to-be-tested unit in the first logic circuit and the second to-be-tested unit in the second logic circuit in response to that the current test coverage and target test coverage do not meet a preset numerical relationship, to obtain a first target logic circuit and a second target logic circuit; and
determining a target integrated circuit corresponding to the target test coverage based on the first target logic circuit and the second target logic circuit.

According to a second aspect of this disclosure, a functional safety testing system for an integrated circuit is provided, including an integrated circuit and a test apparatus for performing functional safety testing on the integrated circuit, wherein the integrated circuit includes a first logic circuit, a second logic circuit, and a comparator;
the test apparatus is configured to determine at least one first to-be-tested unit in the first logic circuit and a second to-be-tested unit corresponding to the first to-be-tested unit in the second logic circuit;
the first logic circuit is coupled to the comparator, and is configured to output first test data to the comparator based on the at least one first to-be-tested unit in the first logic circuit;
the second logic circuit is coupled to the comparator, and is configured to output second test data to the comparator based on at least one second to-be-tested unit in the second logic circuit;
the comparator is coupled to the test apparatus, and is configured to output a consistency test result to the test apparatus based on the first test data and the second test data; and
the test apparatus is configured to determine current test coverage of the integrated circuit based on the consistency test result; adjust the first to-be-tested unit in the first logic circuit and the second to-be-tested unit in the second logic circuit in response to that the current test coverage and target test coverage do not meet a preset numerical relationship, to obtain a first target logic circuit and a second target logic circuit; and determine a target integrated circuit corresponding to the target test coverage based on the first target logic circuit and the second target logic circuit.

An embodiment of a third aspect of this disclosure provides a functional safety testing apparatus for an integrated circuit. The integrated circuit includes a first logic circuit and a second logic circuit for performing functional safety testing on the first logic circuit, and the functional safety testing apparatus includes:
a first determining module, configured to determine at least one first to-be-tested unit in the first logic circuit and a second to-be-tested unit corresponding to the first to-be-tested unit in the second logic circuit;
a functional safety testing module, configured to perform functional safety testing on the first logic circuit and the second logic circuit, to obtain a consistency test result for first test data output by the first to-be-tested unit and second test data output by the corresponding second to-be-tested unit;
a second determining module, configured to determine current test coverage of the integrated circuit based on the consistency test result;
an adjustment module, configured to adjust the first to-be-tested unit in the first logic circuit and the second to-be-tested unit in the second logic circuit in response to that the current test coverage and target test coverage do not meet a preset numerical relationship, to obtain a first target logic circuit and a second target logic circuit; and
a third determining module, configured to determine a target integrated circuit corresponding to the target test coverage based on the first target logic circuit and the second target logic circuit.

An embodiment of a fourth aspect of this disclosure provides a computer readable storage medium. The storage medium stores a computer program that, when executed by a processor, causes the processor to implement the testing method for an integrated circuit according to the first aspect.

In the embodiments of this disclosure, the consistency test result for the first test data output by the first to-be-tested unit in the first logic circuit and the second test data output by the second to-be-tested unit in the second logic circuit is obtained by performing functional safety testing on the first logic circuit and the second logic circuit. Therefore, the consistency test result is related to the first to-be-tested unit in the first logic circuit and the second to-be-tested unit in the second logic circuit. The current test coverage of the integrated circuit that is determined based on the consistency test result is also related to the first to-be-tested unit in the first logic circuit and the second to-be-tested unit in the second logic circuit. Further, when the current test coverage and the target test coverage do not meet the preset numerical relationship, a first test unit in the first logic circuit and a second test unit in the second logic circuit can be adjusted to accurately adjust the current test coverage to the target test coverage, so as to obtain the target integrated circuit corresponding to the target test coverage. Meanwhile, since the implementation of adjusting the first test unit in the first logic circuit and the second test unit in the second logic circuit is relatively simple and does not require to redesign the integrated circuit, human development costs can be effectively saved.

### BRIEF DESCRIPTION OF THE DRAWINGS

FIG. 1 is a schematic diagram of a structure of an integrated circuit to which a Dual core scheme with a high safety level requirement is applicable according to an exemplary embodiment of this disclosure;
FIG. 2 is a schematic diagram of a structure of an integrated circuit to which a Dual core scheme with a low safety level requirement is applicable according to an exemplary embodiment of this disclosure;
FIG. 3 is a schematic diagram of a structure of a functional safety testing system for an integrated circuit according to an exemplary embodiment of this disclosure;
FIG. 4 is a schematic diagram of a structure of another functional safety testing system for an integrated circuit according to an exemplary embodiment of this disclosure;
FIG. 5 is a schematic flowchart of a functional safety testing method for an integrated circuit according to an exemplary embodiment of this disclosure;
FIG. 6 is a schematic flowchart of another functional safety testing method for an integrated circuit according to an exemplary embodiment of this disclosure;
FIG. 7 is a schematic flowchart of still another functional safety testing method for an integrated circuit according to an exemplary embodiment of this disclosure;
FIG. 8 is a schematic flowchart of yet another functional safety testing method for an integrated circuit according to an exemplary embodiment of this disclosure;
FIG. 9 is a schematic flowchart of still yet another functional safety testing method for an integrated circuit according to an exemplary embodiment of this disclosure;
FIG. 10 is a schematic flowchart of a further functional safety testing method for an integrated circuit according to an exemplary embodiment of this disclosure;
FIG. 11 is a schematic diagram of a structure of still another functional safety testing system for an integrated circuit according to an exemplary embodiment of this disclosure;
FIG. 12 is a schematic diagram of a structure of yet another functional safety testing system for an integrated circuit according to an exemplary embodiment of this disclosure;
FIG. 13 is a schematic diagram of a structure of still yet another functional safety testing system for an integrated circuit according to an exemplary embodiment of this disclosure;
FIG. 14 is a schematic diagram of a structure of a functional safety testing apparatus for an integrated circuit according to an exemplary embodiment of this disclosure;
FIG. 15 is a schematic diagram of a structure of another functional safety testing apparatus for an integrated circuit according to an exemplary embodiment of this disclosure;
FIG. 16 is a schematic diagram of a structure of still another functional safety testing apparatus for an integrated circuit according to an exemplary embodiment of this disclosure;
FIG. 17 is a schematic diagram of a structure of yet another functional safety testing apparatus for an integrated circuit according to an exemplary embodiment of this disclosure;
FIG. 18 is a schematic diagram of a structure of still yet another functional safety testing apparatus for an integrated circuit according to an exemplary embodiment of this disclosure;
FIG. 19 is a schematic diagram of a structure of a further functional safety testing apparatus for an integrated circuit according to an exemplary embodiment of this disclosure;
FIG. 20 is a schematic diagram of a structure of a still further functional safety testing apparatus for an integrated circuit according to an exemplary embodiment of this disclosure; and
FIG. 21 is a schematic diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Application overview

Currently, a FuSa mechanism is a key capability in the field of automotive regulations, and has been widely used in in-vehicle integrated circuits. Usually, a FuSa protection scheme for the in-vehicle integrated circuit includes a Dual core scheme applicable to all logic circuits in the integrated circuit. The Dual core scheme requires to replicate an entire to-be-protected logic circuit, so as to test the entire to-be-protected logic circuit, that is, to implement functional safety testing with 100% test coverage.

When the Dual core scheme is adopted for performing functional safety testing on an integrated circuit, all to-be-protected logic circuits in the integrated circuit are in a normal working status. Therefore, a coupling relationship between original logic circuits (the to-be-protected logic circuits) in the integrated circuit in the Dual core scheme is fixed and unchanged (for example, output of each original logic circuit is coupled to another corresponding logic circuit, that is, each original logic circuit can drive a next-stage load circuit). To perform functional safety testing on the integrated circuit, it is merely needed to add, according to requirements for a safety level, a test circuit for performing functional safety testing, and to perform corresponding coupling. In embodiments of this disclosure, the test circuit may include a replicated original logic circuit (a replicated logic circuit), a replicated logic unit, and a comparator.

Since the coupling relationship between the original logic circuits in the integrated circuit does not vary with changes in the functional safety testing with the safety level, the coupling relationship between the original logic circuits is neither displayed nor described in the following embodiments. The coupling relationship between the original logic circuits in the integrated circuit is not limited in the embodiments of this disclosure, and may be determined based on an actual function of the integrated circuit.

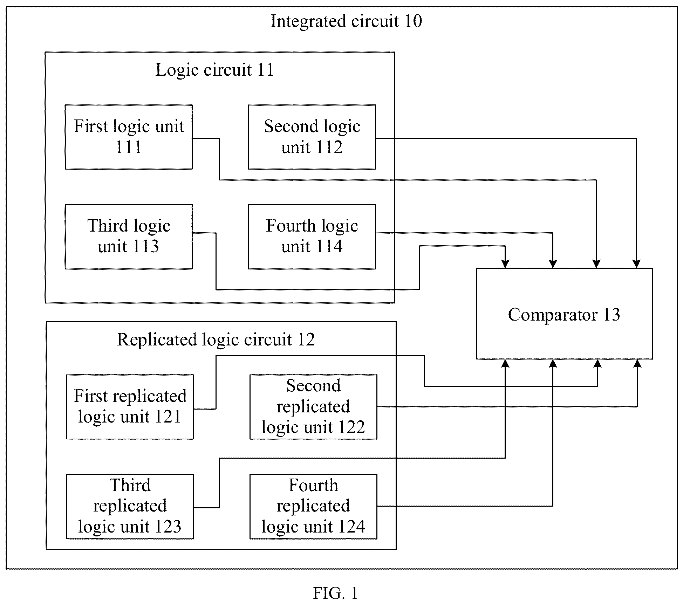

FIG. 1 is a schematic diagram of a structure of an integrated circuit to which a Dual core scheme with a high safety level requirement is applicable according to an exemplary embodiment of this disclosure. As shown in FIG. 1, an integrated circuit 10 may include a logic circuit 11 (a to-be-protected logic circuit), a replicated logic circuit 12 obtained by replicating the logic circuit 11, and a comparator 13 coupled to both the logic circuit 11 and the replicated logic circuit 12.

The logic circuit 11 may include a first logic unit 111 to a fourth logic unit 114. The replicated logic circuit 12 may include a first replicated logic unit 121 to a fourth replicated logic unit 124 respectively corresponding to the logic units in the first logic unit 111 to the fourth logic unit 114.

A first input end of the comparator 13 is coupled to output ends of the first logic unit 111 to the fourth logic unit 114, and a second input end of the comparator 13 is coupled to output ends of the first replicated logic unit 121 to the fourth replicated logic unit 124. The compartment 13 is configured to receive first logical data to fourth logical data respectively output from the first logic unit 111 to the fourth logic unit 114, and first replicated logical data to fourth replicated logical data respectively output from the first replicated logic unit 121 to the fourth replicated logic unit 124; compare each piece of logical data in the first logical data to the fourth logical data with the corresponding replicated logical data in the first replicated logical data to the fourth replicated logical data, to obtain a comparison result; and send the comparison result to an operating system through an output end.

In this embodiment of this disclosure, coupling relationships between the logic units (which may include, in some examples, coupling relationships between the logic units and between the logic units and other logic circuits different from the logic circuit 11) are exactly same as those between the replicated logic units in the replicated logic circuit 12.

In technical solutions of this embodiment of this disclosure, the entire logic circuit 11 is replicated when the Dual core scheme is adopted for performing functional safety testing on the integrated circuit 10 with a high safety level requirement. Therefore, an area is doubled as compared to an original area, and thus area overhead is relatively large.

To reduce the area overhead, when the Dual core scheme is adopted for performing functional safety testing on an integrated circuit with a low safety level requirement (a safety level requiring test coverage below 100%), a plurality of replicated logic units corresponding to target test coverage may be added to to-be-protected original logic circuits. In other words, a target integrated circuit with the target test coverage may be obtained by means of redesigning the integrated circuit.

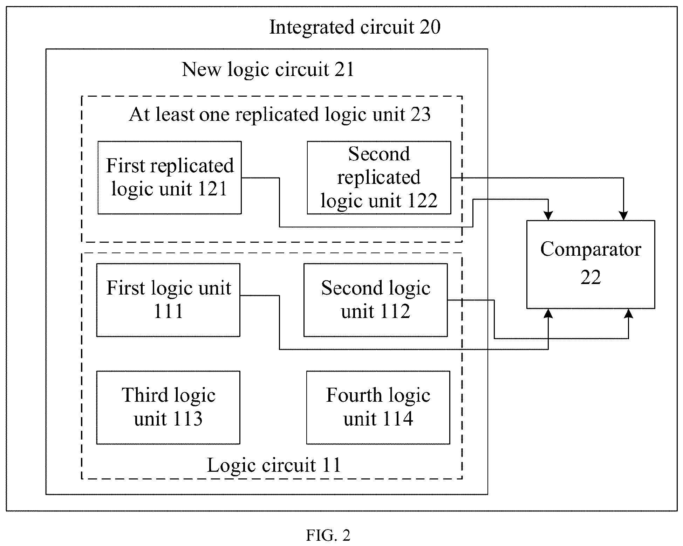

FIG. 2 is a schematic diagram of a structure of an integrated circuit to which a Dual core scheme with requiring a low safety level requirement is applicable according to an exemplary embodiment of this disclosure. As shown in FIG. 2, an integrated circuit 20 may include a new logic circuit 21 and a comparator 22 coupled to the new logic circuit 21. The new logic circuit 21 may include the logic circuit 11 shown in FIG. 1 and at least one replicated logic unit 23 (a replicated to-be-tested unit). Exemplary description is made in this embodiment of this disclosure by using an example in which the at least one replicated logic unit 23 includes a first replicated logic unit 121 corresponding to the first logic unit 111 and a second replicated logic unit 122 corresponding to a second logic unit 112.

Output ends of the first logic unit 111 and the second logic unit 112 are both coupled to a first input end of the comparator 22. Output ends of the first replicated logic unit 121 and the second replicated logic unit 122 are both coupled to a second input end of the comparator 22. An output end of the comparator 22 is configured to send a comparison result to the operating system.

In this embodiment of this disclosure, an input coupling relationship between the replicated logic units in the at least one replicated logic unit 23 is same as that between the corresponding logic units, that is, input data of the replicated logic units is same as that of the corresponding logic units in the original logic circuit. However, output of the replicated logic unit is not coupled to other logic units, that is, the output of the replicated logic unit does not drive a load circuit.

An implementation process of the Dual core scheme with a low safety level requirement is described below with reference to FIG. 2.

First, the first logic unit 111 and the second logic unit 112 output first logical test data and second logical test data to the comparator 22, respectively; and the first replicated logic unit 121 and the second replicated logic unit 122 output first replicated logical test data and second replicated logical test data to the comparator 22, respectively.

Subsequently, the comparator 22 compares the first logical test data with the first replicated logical test data and compares the second logical test data with the second replicated logical test data to obtain comparison results, and sends the comparison results to the operating system.

Subsequently, the operating system calculates current test coverage of the integrated circuit 20 based on the comparison results.

Finally, when it is determined that the current test coverage is not equal to the target test coverage corresponding to a target safety level, a designer redesigns the integrated circuit 20 based on a coverage difference between the current test coverage and the target test coverage, that is, performs repeated design iterations and trade-offs on the replicated logic units in the at least one replicated logic unit 23 based on the logic circuit 11, to obtain the plurality of replicated logic units corresponding to the target coverage, that is, to obtain the target integrated circuit corresponding to the target test coverage.

In the technical solutions of the embodiments of this disclosure, when the Dual core scheme is adopted for performing functional safety testing on a to-be-protected logic circuit with a low safety level requirement, only some logic units (to-be-tested units) in a to-be-protected original logic circuit are replicated. In this case, the area overhead can be reduced. However, a process of redesigning the integrated circuit requires repeated design iterations and trade-offs to determine the plurality of replicated logic units corresponding to the target test coverage, which consumes a huge amount of human resources.

On the basis of the foregoing technical problem, an embodiment of this disclosure provides a functional safety testing method for an integrated circuit. The method includes: determining current test coverage of the integrated circuit based on a consistency test result of first test data output by a first to-be-tested unit in a first logic circuit and second test data output by a corresponding second to-be-tested unit in a second logic circuit; adjusting the first to-be-tested unit in the first logic circuit and the second to-be-tested unit in the second logic circuit based on a difference between the current test coverage and target test coverage; and finally, determining a target integrated circuit corresponding to the target test coverage based on an obtained first target logic circuit and an obtained second target logic circuit.

The current test coverage of the integrated circuit is related to the first to-be-tested unit in the first logic circuit and the second to-be-tested unit in the second logic circuit. Therefore, when the current test coverage and the target test coverage do not meet a preset numerical relationship, a first test unit in the first logic circuit and a second test unit in the second logic circuit can be adjusted to accurately adjust the current test coverage to the target test coverage, so as to obtain the target integrated circuit. Meanwhile, since the implementation of adjusting the first test unit in the first logic circuit and the second test unit in the second logic circuit is relatively simple and does not require to redesign the integrated circuit, human development costs can be effectively saved.

### Exemplary system

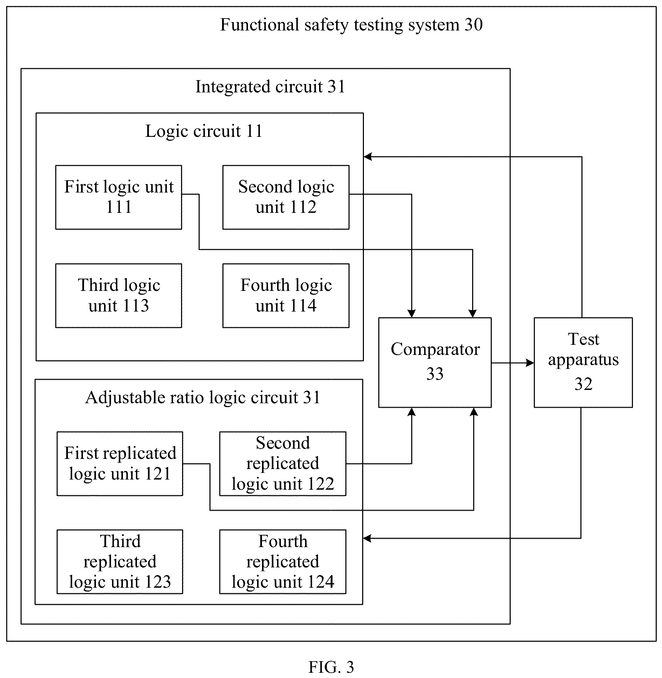

FIG. 3 is a schematic diagram of a structure of a functional safety testing system for an integrated circuit according to an exemplary embodiment of this disclosure. As shown in FIG. 3, a functional safety testing system 30 includes an integrated circuit 31 and a test apparatus 32 for performing functional safety testing. The integrated circuit 31 may include a logic circuit 11 shown in FIG. 1, an adjustable ratio logic circuit 31, and a comparator 33. The adjustable ratio logic circuit 31 may include a first replicated logic unit 121 to a fourth replicated logic unit 124 as shown in FIG. 1.

An output end of at least one logic unit in the logic circuit 11 is coupled to a first input end of the comparator 33, and an output end of at least one corresponding replicated logic unit in the adjustable ratio logic circuit 31 is coupled to a second input end of the comparator 33. An output end of the comparator 33 is configured to send a comparison result. Exemplary description is made in this embodiment of this disclosure by using an example in which output ends of a first logic unit 111 and a second logic unit 112 in the logic circuit 11 are both coupled to the first input end of the comparator 33, and output ends of the first replicated logic unit 121 and a second replicated logic unit 122 are both coupled to the second input end of the comparator 33.

In this embodiment of this disclosure, an input coupling relationship between the replicated logic units in the adjustable ratio logic circuit 31 is same as that between the corresponding logic units, that is, input data of the replicated logic units is same as that of the corresponding logic units in an original logic circuit. However, output of the replicated logic unit is not coupled to other logic units, that is, the output of the replicated logic unit does not drive a load circuit.

In this embodiment of this disclosure, the test apparatus 32 may be a personal computer or an industrial computer equipped with an electronic design automation (EDA) software testing tool.

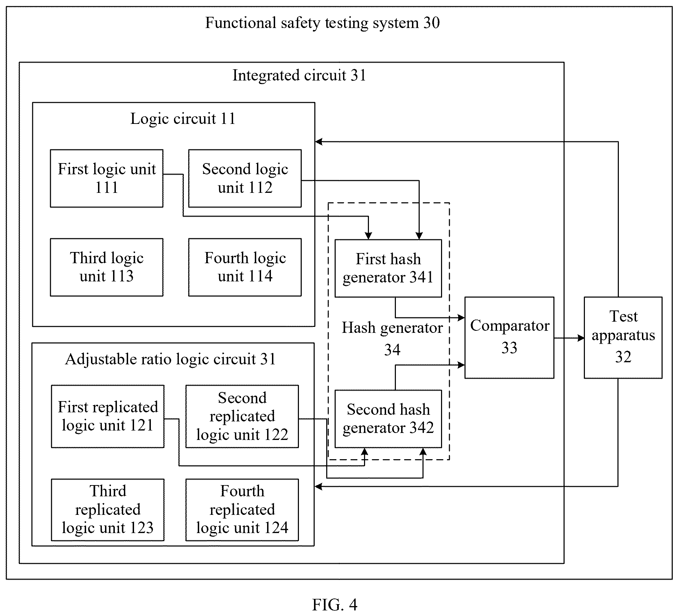

On the basis of the embodiment shown in FIG. 3, an embodiment of this disclosure provides another functional safety testing system for an integrated circuit. As shown in FIG. 4, the integrated circuit 31 in the functional safety testing system 30 further includes a hash generator 34, which may include a first hash generator 341 and a second hash generator 342.

The output ends of the first logic unit 111 and the second logic unit 112 are both coupled to an input end of the first hash generator 341; and an output end of the first hash generator 341 is coupled to the first input end of the comparator 33. The output ends of the first replicated logic unit 121 and the second replicated logic unit 122 are both coupled to an input end of the second hash generator 342; and an output end of the second hash generator 342 is coupled to the second input end of the comparator 33.

In some embodiments of this disclosure, each of the first hash generator 341 and the second hash generator 342 may include at least one hash generation module, and quantities of the hash generation modules in the first hash generator 341 and/or the second hash generator 342 may be determined based on bit widths of the hash generation modules, and quantities and bit widths of a first to-be-tested unit and a second to-be-tested unit included in the logic circuit 11 and/or the adjustable ratio logic circuit 31. The quantities of the hash generation modules included in the first hash generator 341 and the second hash generator 342 are not limited in the embodiments of this disclosure. Exemplary description is made in the embodiments of this disclosure by using an example in which each of the first hash generator 341 and the second hash generator 342 includes one hash generation module.

### Exemplary method

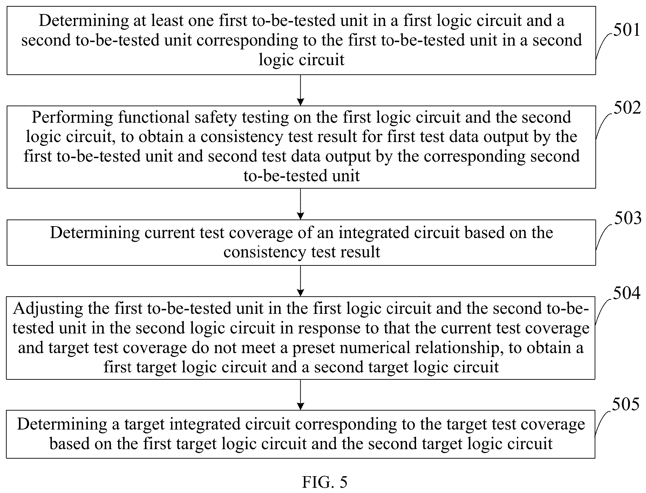

FIG. 5 is a schematic flowchart of a functional safety testing method for an integrated circuit according to an exemplary embodiment of this disclosure. The functional safety testing method for an integrated circuit may be applied to a functional safety testing system 30 shown in FIG. 3 and/or FIG. 4. As shown in FIG. 5, the functional safety testing method for an integrated circuit may include the following steps 501 to 505.

Step 501: Determining at least one first to-be-tested unit in a first logic circuit and a second to-be-tested unit corresponding to the first to-be-tested unit in a second logic circuit.

For example, the first logic circuit may be an original logic circuit in the integrated circuit, and output ends of all logic units included in the first logic circuit may be coupled to corresponding logic units. The first to-be-tested unit may be an original logic unit in the original logic circuit that requires functional safety testing. In some examples, as shown in FIG. 3 or FIG. 4, the first logic circuit may be a logic circuit 11, in which a first logic unit 111 to a fourth logic unit 114 are all coupled to corresponding logic units (not shown in FIG. 3 or FIG. 4). At least one to-be-tested unit may include the first logic unit 111 and a second logic unit 112 that are coupled to a comparator 33.

For example, the second logic circuit may be obtained by replicating the logic units in the first logic circuit, and output ends of logic units included in the second logic circuit are not coupled to logic units. In some examples, as shown in FIG. 3 or FIG. 4, the second logic circuit may be an adjustable ratio logic circuit 31 obtained by replicating the first logic unit 111 to the fourth logic unit 114, and output of a first replicated logic unit 121 to a fourth replicated logic unit 124 in the adjustable ratio logic circuit 31 is not coupled to a logic unit.

For example, the second to-be-tested unit may be a logic unit requiring functional safety testing among a plurality of replicated logic units. In some examples, as shown in FIG. 3 or FIG. 4, at least one second to-be-tested unit may include the first replicated logic unit 121 and a second replicated logic unit 122.

For example, determining the at least one first to-be-tested unit in the first logic circuit may include, without any basis, arbitrarily determining at least one logic unit requiring functional safety testing from a plurality of logic units in the first logic circuit, and determining the logic unit requiring functional safety testing as the first to-be-tested unit; or may include determining at least one logic unit requiring functional safety testing from a plurality of logic units in the first logic circuit based on target test coverage for the functional safety testing, and determining the logic unit requiring functional safety testing as the first to-be-tested unit. A specific implementation of determining at least one first to-be-tested unit from the first logic circuit is not limited in this embodiment of this disclosure. Exemplary description is made in this embodiment of this disclosure by using an example in which at least one to-be-tested unit is determined from a plurality of logic units in the first logic circuit based on the target test coverage.

For example, as shown in FIG. 3, step 501 may include: a test apparatus 32 determines, based on a safety level of the integrated circuit, the target test coverage for performing functional safety testing on the integrated circuit; and then determines, based on the target test coverage, from the first logic unit 111 to the fourth logic unit 114 of the logic circuit 11 that the first logic unit 111 and the second logic unit 112 require functional safety testing, and determines the first logic unit 111 and the second logic unit 112 as the at least one first to-be-tested unit; determines the first replicated logic unit 121 corresponding to the first logic unit 111 and the second replicated logic unit 122 corresponding to the second logic unit 112 from the first replicated logic unit 121 to the fourth replicated logic unit 124 of the adjustable ratio logic circuit 31; and determines the first replicated logic unit 121 and the second replicated logic unit 122 as the at least one second to-be-tested unit.

In some examples, the test apparatus 32 may determine the at least one first to-be-tested unit and the at least one second to-be-tested unit through a script program by using the foregoing method.

For example, as shown in FIG. 3, the at least one first to-be-tested unit includes the first logic unit 111 and the second logic unit 112, and the at least one second to-be-tested unit includes the first replicated logic unit 121 and the second replicated logic unit 122. After determining the at least one first to-be-tested unit and the at least one second to-be-tested unit through the script program, the test apparatus 32 also includes: coupling output ends of the first logic unit 111 and the second logic unit 112 to the first input end of the comparator 33 through an EDA software testing operation, to perform functional safety testing on the first logic unit 111 and the second logic unit 112; and coupling output ends of the first replicated logic unit 121 and the second replicated logic unit 122 to the second input end of the comparator 33, to perform functional safety testing on the first replicated logic unit 121 and the second replicated logic unit 122.

Step 502: Performing functional safety testing on the first logic circuit and the second logic circuit, to obtain a consistency test result for first test data output by the first to-be-tested unit and second test data output by the corresponding second to-be-tested unit.

For example, the first test data may be first processed data obtained by processing input first to-be-processed data by the first to-be-tested unit in the first logic circuit. The second test data may be second processed data obtained by processing input second to-be-processed data by the second to-be-tested unit in the second logic circuit. In some examples, the first to-be-processed data and the second to-be-processed data may be same data. When the first test unit and the second test unit are normal, the first processed data and the second processed data are also same data, that is, the first test data is consistent with the second test data.

For example, the consistency test result may be a comparison result between the first test data and the second test data, and may include that the first test data is consistent or inconsistent with the second test data. In some examples, a logic high level "1" may be used to indicate that the first test data is consistent with the second test data; and a logic low level "0" may be used to indicate that the first test data is inconsistent with the second test data. In some other examples, the logic low level "0" may be used to indicate that the first test data is consistent with the second test data; and the logic high level "1" may be used to indicate that the first test data is inconsistent with the second test data. A specific implementation of the consistency test result is not limited in this embodiment of this disclosure. Exemplary description is made in this embodiment of this disclosure by using an example in which the logic high level "1" is used to indicate that the first test data is consistent with the second test data, and the logic low level "0" is used to indicate that the first test data is inconsistent with the second test data.

For example, performing functional safety testing on the first logic circuit and the second logic circuit may include: inputting the corresponding first to-be-processed data to the logic units in the first logic circuit, and inputting the corresponding second to-be-processed data to the replicated logic units in the second logic circuit, so as to perform functional safety testing on the first logic circuit and the second logic circuit.

In some examples, as shown in FIG. 3, the first logic circuit is the logic circuit 11, and the second logic circuit is the adjustable ratio logic circuit 31. Performing functional safety testing on the first logic circuit and the second logic circuit may include: inputting the corresponding first to-be-processed data to the first logic unit 111 to the fourth logic unit 114 in the logic circuit 11 respectively by using an EDA software testing tool in the test apparatus 32 by means of emulation, and inputting the corresponding second to-be-processed data to the first replicated logic unit 121 to the fourth replicated logic unit 124 in the adjustable ratio logic circuit 31 respectively, so as to perform functional safety testing on the logic circuit 11 and the adjustable ratio logic circuit 31.

For example, when performing functional safety testing on the first logic circuit and the second logic circuit, the first test data and the second test data may be first obtained, and then the first test data is compared with the second test data to obtain the consistency test result for the first test data and the second test data.

In some examples, the at least one first to-be-tested unit includes the first logic unit 111 and the second logic unit 112, and the at least one second to-be-tested unit includes the first replicated logic unit 121 and the second replicated logic unit 122. After the corresponding first to-be-processed data is respectively input to the first logic unit 111 to the fourth logic unit 114 in the logic circuit 11, and the corresponding second to-be-processed data is respectively input to the first replicated logic unit 121 to the fourth replicated logic unit 124 in the adjustable ratio logic circuit 31, the first logic unit 111 and the second logic unit 112 may output the first test data to the comparator 33, and the first replicated logic unit 121 and the second replicated logic unit 122 may output the second test data to the comparator 33. Further, the comparator 33 may compare the first test data with the second test data to obtain the consistency test result of the first test data and the second test data.

Step 503: Determining current test coverage of the integrated circuit based on the consistency test result.

For example, step 503 may include: determining structures of and a coupling relationship between original logic circuits in the integrated circuit, and determining the current test coverage of the integrated circuit based on the structures, the coupling relationship, and the consistency test result.

In some examples, as shown in FIG. 3, the EDA software testing tool in the test apparatus 32 may obtain the consistency test result of the first test data and the second test data in a real-time manner, and may calculate the current test coverage corresponding to the consistency test results based on the pre-stored structures and coupling relationship of the original logic circuits in the integrated circuit.

Step 504: Adjusting the first to-be-tested unit in the first logic circuit and the second to-be-tested unit in the second logic circuit in response to that the current test coverage and target test coverage do not meet a preset numerical relationship, to obtain a first target logic circuit and a second target logic circuit.

For example, the preset numerical relationship may indicate that numerical values are equal or close. In some examples, if a coverage difference between the current test coverage and the target test coverage is less than a difference threshold, it is determined that the current test coverage is equal to or close to the target test coverage

For example, as shown in FIG. 3, the test apparatus 32 may determine the coverage difference between the current test coverage and the target test coverage through a script program. When the coverage difference is greater than or equal to the difference threshold, it is determined that the current test coverage and the target test coverage do not meet the preset numerical relationship. When the coverage difference is less than the difference threshold, it is determined that the current test coverage and the target test coverage meet the preset numerical relationship.

For example, the first target logic circuit may be the first logic circuit with the first test unit adjusted. The second target logic circuit may be the second logic circuit with the second test unit adjusted.

For example, adjusting the first to-be-tested unit in the first logic circuit and the second to-be-tested unit in the second logic circuit to obtain the first target logic circuit and the second target logic circuit may include: adding, reducing, or replacing the first to-be-tested unit in the first logic circuit and the second to-be-tested unit in the second logic circuit; determining the first target logic circuit based on the added, reduced, or replaced first to-be-tested unit; and determining the second target logic circuit based on the added, reduced, or replaced second test unit.

In some examples, as shown in FIG. 3, the first to-be-tested unit includes the first logic unit 111 and the second logic unit 112, and the second to-be-tested unit includes the first replicated logic unit 121 and the second replicated logic unit 122. Adding, reducing, or replacing the first to-be-tested unit in the first logic circuit and the second to-be-tested unit in the second logic circuit may include: the test apparatus 32 adds, through a script program, a third logic unit 113 or the fourth logic unit 114 as a first to-be-tested unit, and correspondingly adds a third replicated logic unit 123 or the fourth replicated logic unit 124 as a second to-be-tested unit; or removes testing for the first logic unit 111 or the second logic unit 112, and correspondingly removes testing for the first replicated logic unit 121 or the second replicated logic unit 122; or replaces the testing for the first logic unit 111 or the second logic unit 112 with testing for the third logic unit 113 or the fourth logic unit 114, and correspondingly replaces the testing for the first replicated logic unit 121 or the second replicated logic unit 122 with testing for the third replicated logic unit 123 or the fourth replicated logic unit 124.

Step 505: Determining a target integrated circuit corresponding to the target test coverage based on the first target logic circuit and the second target logic circuit.

For example, the target test coverage may be test coverage that is determined based on the safety level of the integrated circuit and is required for performing functional safety testing on the integrated circuit. In some examples, the target test coverage may be any value less than 100%, for example, may be 80% or 90%. A specific value of the target test coverage is not limited in this embodiment of this disclosure. Exemplary description is made in this embodiment of this disclosure by using an example in which the target test coverage is 90%.

For example, as shown in FIG. 3 or FIG. 4, step 505 may include: the test apparatus 32 determines latest test coverage of the integrated circuit based on the first target logic circuit and the second target logic circuit; and then determines whether the latest test coverage and the target test coverage meet a preset numerical relationship; when determining that the latest test coverage and the target test coverage meet the preset numerical relationship, determines an integrated circuit corresponding to the first target logic circuit and the second target logic circuit as the target integrated circuit corresponding to the target test coverage; and when determining that the latest test coverage and the target test coverage do not meet the preset numerical relationship, continues to adjust a logic unit (the first to-be-tested unit) in the logic circuit 11 that is coupled to the comparator 33 or a first hash generator 341, and a replicated logic unit (the second to-be-tested unit) in the adjustable ratio logic circuit 31 that is coupled to the comparator 33 or a second hash generator 342; subsequently, updates the first target logic circuit and the second target logic circuit, until the latest test coverage determined based on the updated first target logic circuit and the updated second target logic circuit and the target test coverage meet the preset numerical relationship; and determines an integrated circuit corresponding to a latest first target logic circuit and a latest second target logic circuit as the target integrated circuit corresponding to the target test coverage.

In this embodiment of this disclosure, the consistency test result for the first test data output by the first to-be-tested unit in the first logic circuit and the second test data output by the second to-be-tested unit in the second logic circuit is obtained by performing functional safety testing on the first logic circuit and the second logic circuit. Therefore, the consistency test result is related to the first to-be-tested unit in the first logic circuit and the second to-be-tested unit in the second logic circuit. The current test coverage of the integrated circuit that is determined based on the consistency test result is also related to the first to-be-tested unit in the first logic circuit and the second to-be-tested unit in the second logic circuit. Further, when the current test coverage and the target test coverage do not meet the preset numerical relationship, the first test unit in the first logic circuit and the second test unit in the second logic circuit can be adjusted to accurately adjust the current test coverage to the target test coverage, so as to obtain the target integrated circuit corresponding to the target test coverage. Meanwhile, since the implementation of adjusting the first test unit in the first logic circuit and the second test unit in the second logic circuit is relatively simple and does not require to redesign the integrated circuit, human development costs can be effectively saved.

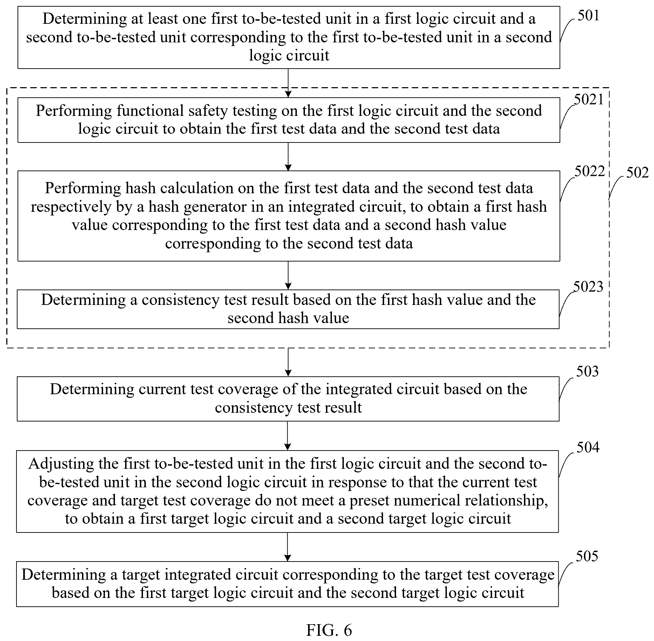

As shown in FIG. 6, on the basis of the embodiment shown in FIG. 5, step 502 may include the following steps 5021 to 5023.

Step 5021: Performing functional safety testing on the first logic circuit and the second logic circuit to obtain the first test data and the second test data.

For example, step 5021 may include: inputting corresponding first to-be-processed data to the logic units in the first logic circuit, and inputting corresponding second to-be-processed data to the replicated logic units in the second logic circuit; processing the first to-be-processed data by the first to-be-tested unit in the first logic circuit, to obtain the first test data; and processing the second to-be-processed data by the second to-be-tested unit in the second logic circuit, to obtain the second test data.

In some examples, the at least one first to-be-tested unit includes the first logic unit 111 and the second logic unit 112, and the at least one second to-be-tested unit includes the first replicated logic unit 121 and the second replicated logic unit 122. As shown in FIG. 4, step 5021 may specifically include: inputting the corresponding first to-be-processed data to the first logic unit 111 to the fourth logic unit 114 in the logic circuit 11 respectively, and inputting the corresponding second to-be-processed data to the first replicated logic unit 121 to the fourth replicated logic unit 124 in the adjustable ratio logic circuit 31 respectively. In response to the received first to-be-processed data, the first logic unit 111 and the second logic unit 112 respectively process the first to-be-processed data to obtain the first test data (the first processed data), and output the first test data to a hash generator 34. In response to the received second to-be-processed data, the first replicated logic unit 121 and the second replicated logic unit 122 respectively process the second to-be-processed data to obtain the second test data (the second processed data), and output the second test data to the hash generator 34.

Step 5022: Performing hash calculation on the first test data and the second test data respectively by a hash generator in the integrated circuit, to obtain a first hash value corresponding to the first test data and a second hash value corresponding to the second test data.

For example, as shown in FIG. 4, step 5022 may include: the hash generator 34 performs hash calculation on the first test data and the second test data separately, outputs the obtained first hash value corresponding to the first test data to the first input end of the comparator 33, and outputs the obtained second hash value corresponding to the second test data to the second input end of the comparator 33.

In some embodiments of this disclosure, the hash generator may include a first hash generator and a second hash generator. Step 5022 may include: performing hash calculation on the first test data by the first hash generator, to obtain the first hash value; and performing hash calculation on the second test data by the second hash generator, to obtain the second hash value.

For example, as shown in FIG. 4, the first logic unit 111 and the second logic unit 112 may output the first test data to the first hash generator 341 in the hash generator 34, and the first replicated logic unit 121 and the second replicated logic unit 122 may output the second test data to the second hash generator 342 in the hash generator 34. Correspondingly, step 5022 may include: the first hash generator 341 processes the first test data through a corresponding first hash algorithm to obtain the first hash value with a first fixed length, and outputs the first hash value to the first input end of the comparator 33; and the second hash generator 342 processes the second test data through a corresponding second hash algorithm to obtain the second hash value with a second fixed length, and outputs the second hash value to the second input end of the comparator 33.

In some examples, the first hash algorithm and the second hash algorithm may be a same algorithm. The first fixed length and the second fixed length may be a same length, and the first fixed length and/or the second fixed length may be smaller than both a bit width of the first test data and a bit width of the second test data. In this way, the first hash value and the second hash value with a same small bit width can be correspondingly obtained by the first hash generator and the second hash generator.

Step 5023: Determining the consistency test result based on the first hash value and the second hash value.

For example, as shown in FIG. 4, the comparator 33 may compare the first hash value with the second hash value to obtain the consistency test result, and output the consistency test result to the test apparatus 32.

In the embodiments of this disclosure, performing hash calculation on the first test data by the first hash generator can obtain the first hash value representing the first test data; and performing hash calculation on the second test data by the second hash generator can obtain the second hash value representing the second test data. In this way, when the lengths of the first hash value and the second hash value are same and are less than both lengths of the first test data and the second test data, comparing the first hash value with the second hash value can not only accurately determine the consistency test result of the first test data and the second test data, but can also reduce computational complexity during the comparison.

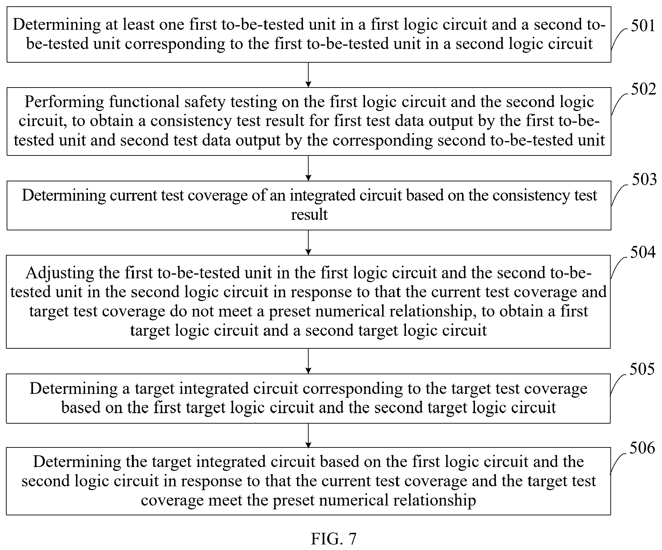

As shown in FIG. 7, on the basis of the embodiments shown in FIG. 5, the functional safety testing method for an integrated circuit may further include the following step 506.

Step 506: Determining the target integrated circuit based on the first logic circuit and the second logic circuit in response to that the current test coverage and the target test coverage meet the preset numerical relationship.

For example, step 506 may include: when the current test coverage and the target test coverage meet the preset numerical relationship, determining the first logic circuit as the first target logic circuit; removing logic units except the second to-be-tested unit in the second logic circuit (retaining at least one second to-be-tested unit in the second logic circuit), and determining the retaining at least one second to-be-tested unit as the second target logic circuit; and finally, determining the integrated circuit corresponding to the first target logic circuit and the second target logic circuit as the target integrated circuit.

In some examples, the at least one first to-be-tested unit includes the first logic unit 111 and the second logic unit 112, and the at least one second to-be-tested unit includes the first replicated logic unit 121 and the second replicated logic unit 122. As shown in FIG. 3 or FIG. 4, step 506 may specifically include: when the current test coverage and the target test coverage meet the preset numerical relationship, using an integrated circuit 11 as the first target logic circuit; automatically removing the third replicated logic unit 123 and the fourth replicated logic unit 124 from the adjustable ratio logic circuit 31 by using the EDA software testing tool in the test apparatus 32, and using the remaining first replicated logic unit 121 and second replicated logic unit 122 as the second target logic circuit; and finally, determining an integrated circuit of the first replicated logic unit 121 and the second replicated logic unit 122 and the integrated circuit 11 as the target integrated circuit.

In the embodiments of this disclosure, since the current test coverage is determined based on the consistency test result, while the consistency test result is related to the first to-be-tested unit in the first logic circuit and the second to-be-tested unit in the second logic circuit, the current test coverage corresponds to the first to-be-tested unit in the first logic circuit and the second to-be-tested unit in the second logic circuit. Further, when the current test coverage and the target test coverage meet the preset numerical relationship, the target integrated circuit corresponding to the target test coverage can be accurately determined based on the first logic circuit and the second logic circuit.

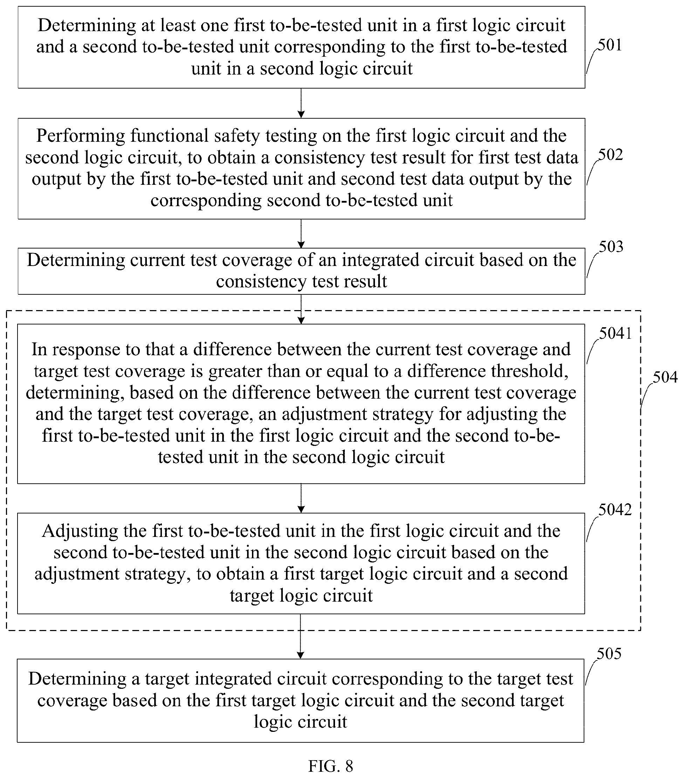

As shown in FIG. 8, on the basis of the embodiments shown in FIG. 5, step 504 may include the following steps 5041 and 5042.

Step 5041: In response to that a difference between the current test coverage and the target test coverage is greater than or equal to a difference threshold, determining, based on the difference between the current test coverage and the target test coverage, an adjustment strategy for adjusting the first to-be-tested unit in the first logic circuit and the second to-be-tested unit in the second logic circuit.

For example, the preset numerical relationship between the current test coverage and the target test coverage may be expressed as that the difference between the current test coverage and the target test coverage is greater than or equal to the difference threshold. The difference threshold is used to indicate a degree at which the current test coverage is close to the target test coverage, and may be determined based on testing accuracy of a functional safety testing system for an integrated circuit. In some examples, the difference threshold may be a positive value or a negative value because the current test coverage may approach the target test coverage in a forward direction (a direction from small to large) or in a reverse direction (a direction from large to small). A positive or negative sign and a specific value of the difference threshold are not limited in the embodiments of this disclosure.

For example, the adjustment strategy may include a first adjustment strategy for adjusting the first to-be-tested unit in the first logic circuit and a second adjustment strategy for adjusting the second to-be-tested unit in the second logic circuit. In some examples, the first adjustment strategy may correspond to the second adjustment strategy. For example, the first adjustment strategy is to add a first to-be-tested unit, while the second adjustment strategy correspondingly is to add a second to-be-tested unit. For another example, the first adjustment strategy is to reduce a first to-be-tested unit, while the second adjustment strategy correspondingly is to reduce a second to-be-tested unit. For still another example, the first adjustment strategy is to replace the first to-be-tested unit, while the second adjustment strategy correspondingly is to replace the second to-be-tested unit.

For example, as shown in FIG. 3 or FIG. 4, step 5041 may include: when determining that the difference between the current test coverage and the target test coverage is greater than or equal to the difference threshold, the test apparatus 32 generates, based on the difference between the current test coverage and the target test coverage, the first adjustment strategy for adjusting the logic unit (the first to-be-tested unit) in the logic circuit 11 that is coupled to the comparator 33 or the first hash generator 341, and the second adjustment strategy for adjusting the replicated logic unit (the second to-be-tested unit) in the adjustable ratio logic circuit 31 that is coupled to the comparator 33 or the second hash generator 342.

Step 5042: Adjusting the first to-be-tested unit in the first logic circuit and the second to-be-tested unit in the second logic circuit based on the adjustment strategy, to obtain the first target logic circuit and the second target logic circuit.

For example, as shown in FIG. 3 or FIG. 4, step 5042 may include: the test apparatus 32 adjusts, based on the first adjustment strategy, the logic unit in the logic circuit 11 that is coupled to the comparator 33 or the first hash generator 341, to obtain the first target logic circuit; and adjusts, based on the second adjustment strategy, the replicated logic unit in the adjustable ratio logic circuit 31 that is coupled to the comparator 33 or the second hash generator 342, to obtain the second target logic circuit.

In the embodiments of this disclosure, since the current test coverage corresponds to the first to-be-tested unit in the first logic circuit and the second to-be-tested unit in the second logic circuit, when the difference between the current test coverage and the target test coverage is greater than or equal to the difference threshold, the adjustment strategy for adjusting the first to-be-tested unit in the first logic circuit and the second to-be-tested unit in the second logic circuit can be accurately determined based on the difference between the current test coverage and the target test coverage. Further, the first target logic circuit and the second target logic circuit corresponding to the target test coverage can be obtained by adjusting the first to-be-tested unit in the first logic circuit and the second to-be-tested unit in the second logic circuit based on the adjustment strategy, so that a speed of obtaining the target integrated circuit can be accelerated based on the first target logic circuit and the second target logic circuit.

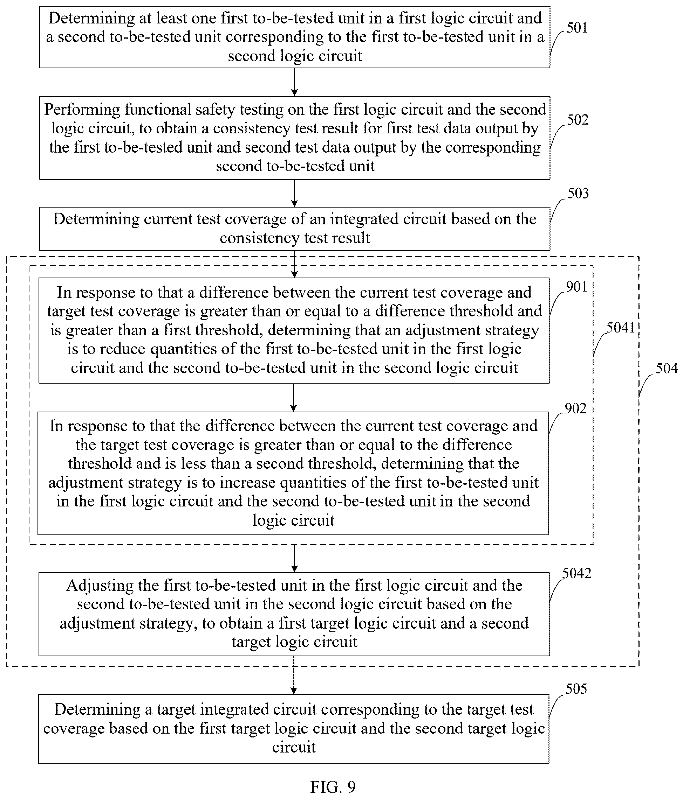

As shown in FIG. 9, on the basis of the embodiment shown in FIG. 8, step 5041 may include the following steps 901 and 902.

Step 901: In response to that the difference between the current test coverage and the target test coverage is greater than or equal to the difference threshold and is greater than a first threshold, determining that the adjustment strategy is to reduce quantities of the first to-be-tested unit in the first logic circuit and the second to-be-tested unit in the second logic circuit.

For example, the first threshold is used to indicate a magnitude relationship between the current test coverage and the target test coverage. If the difference between the current test coverage and the target test coverage is greater than the first threshold, the current test coverage is greater than the target test coverage. In some examples, the first threshold may be a numerical value 0.

For example, the at least one first to-be-tested unit includes two logic units (the first logic unit 111 and the second logic unit 112), and the at least one second to-be-tested unit includes two replicated logic units (the first replicated logic unit 121 and the second replicated logic unit 122). As shown in FIG. 3 or FIG. 4, step 901 may include: when the difference between the current test coverage and the target test coverage is greater than or equal to the difference threshold and is greater than the first threshold, the test apparatus 32 determines that the adjustment strategy includes a first adjustment strategy for reducing the quantity of the at least one first to-be-tested unit from 2 to 1, and a second adjustment strategy for reducing the quantity of the at least one second to-be-tested unit from 2 to 1.

In some examples, taking that the at least one first to-be-tested unit includes the first logic unit 111 and the second logic unit 112 as an example, the first adjustment strategy may include removing coupling between the first logic unit 111 or the second logic unit 112 and the comparator 33 or the first hash generator 341.

In some examples, taking that the at least one second to-be-tested unit includes the first replicated logic unit 121 and the second replicated logic unit 122 as an example, the second adjustment strategy may include removing coupling between the first replicated logic unit 121 or the second replicated logic unit 122 and the comparator 33 or the second hash generator 342.

Step 902: In response to that the difference between the current test coverage and the target test coverage is greater than or equal to the difference threshold and is less than a second threshold, determining that the adjustment strategy is to increase quantities of the first to-be-tested unit in the first logic circuit and the second to-be-tested unit in the second logic circuit.

For example, the second threshold is also used to indicate a magnitude relationship between the current test coverage and the target test coverage. If the difference between the current test coverage and the target test coverage is less than the second threshold, the current test coverage is less than the target test coverage. In some examples, the second threshold may be same as the first threshold. For example, the second threshold may also be the numerical value 0.

For example, the at least one first to-be-tested unit includes two logic units (the first logic unit 111 and the second logic unit 112), and the at least one second to-be-tested unit includes two replicated logic units (the first replicated logic unit 121 and the second replicated logic unit 122). As shown in FIG. 3 or FIG. 4, step 902 may include: when the difference between the current test coverage and the target test coverage is greater than or equal to the difference threshold and is less than the second threshold, the test apparatus 32 determines that the adjustment strategy includes a first adjustment strategy for increasing the quantity of the at least one first to-be-tested unit from 2 to 3, and a second adjustment strategy for increasing the quantity of the at least one second to-be-tested unit from 2 to 3.

In some examples, taking that the at least one first to-be-tested unit includes the first logic unit 111 and the second logic unit 112 as an example, the first adjustment strategy may include adding coupling between the third logic unit 113 or the fourth logic unit 114 and the comparator 33 or the first hash generator 341.

In some examples, taking that the at least one second to-be-tested unit includes the first replicated logic unit 121 and the second replicated logic unit 122 as an example, the second adjustment strategy may include adding coupling between the third replicated logic unit 123 or the fourth replicated logic unit 124 and the comparator 33 or the second hash generator 342.

In the embodiments of this disclosure, since the current test coverage corresponds to the first to-be-tested unit in the first logic circuit and the second to-be-tested unit in the second logic circuit, when the difference between the current test coverage and the target test coverage is greater than or equal to the difference threshold and is greater than the first threshold, it is determined that the adjustment strategy is to reduce the quantities of the first to-be-tested unit in the first logic circuit and the second to-be-tested unit in the second logic circuit. This can effectively reduce the current test coverage, and thus the current test coverage is close to the target test coverage. When the difference between the current test coverage and the target test coverage is greater than or equal to the difference threshold and is less than the second threshold, it is determined that the adjustment strategy is to increase the quantities of the first to-be-tested unit in the first logic circuit and the second to-be-tested unit in the second logic circuit. This can effectively increase the current test coverage, and thus the current test coverage is close to the target test coverage.

In some other embodiments of this disclosure, step 5041 may further include: determining, in response to that the difference between the current test coverage and the target test coverage is greater than or equal to the difference threshold and is greater than the first threshold, that the adjustment strategy is to replace the first to-be-tested unit in the first logic circuit and the second to-be-tested unit in the second logic circuit; and determining, in response to that the difference between the current test coverage and the target test coverage is greater than or equal to the difference threshold and is less than the second threshold, that the adjustment strategy is to replace the first to-be-tested unit in the first logic circuit and the second to-be-tested unit in the second logic circuit.

For example, the at least one first to-be-tested unit includes the first logic unit 111 and the second logic unit 112, as shown in FIG. 3 or FIG. 4, and the at least one first to-be-tested unit includes the first logic unit 111 and the second logic unit 112 and the at least one second to-be-tested unit includes the first replicated logic unit 121 and the second replicated logic unit 122.

As shown in FIG. 3 or FIG. 4, the determining, in response to that the difference between the current test coverage and the target test coverage is greater than or equal to the difference threshold and is greater than the first threshold, that the adjustment strategy is to replace the first to-be-tested unit in the first logic circuit and the second to-be-tested unit in the second logic circuit may include: when the difference between the current test coverage and the target test coverage is greater than or equal to the difference threshold and is greater than the first threshold, the test apparatus 32 determines that the adjustment strategy includes a first adjustment strategy for replacing the first logic unit 111 or the second logic unit 112 with the third logic unit 113 or the fourth logic unit 114, and a second adjustment strategy for replacing the first replicated logic unit 121 or the second replicated logic unit 122 with the third replicated logic unit 123 or the fourth replicated logic unit 124.

In some examples, replacing the first logic unit 111 or the second logic unit 112 with the third logic unit 113 or the fourth logic unit 114 may include: first removing the coupling between the first logic unit 111 or the second logic unit 112 and the comparator 33 or the first hash generator 341, and then adding the coupling between the third logic unit 113 or the fourth logic unit 114 and the comparator 33 or the first hash generator 341.

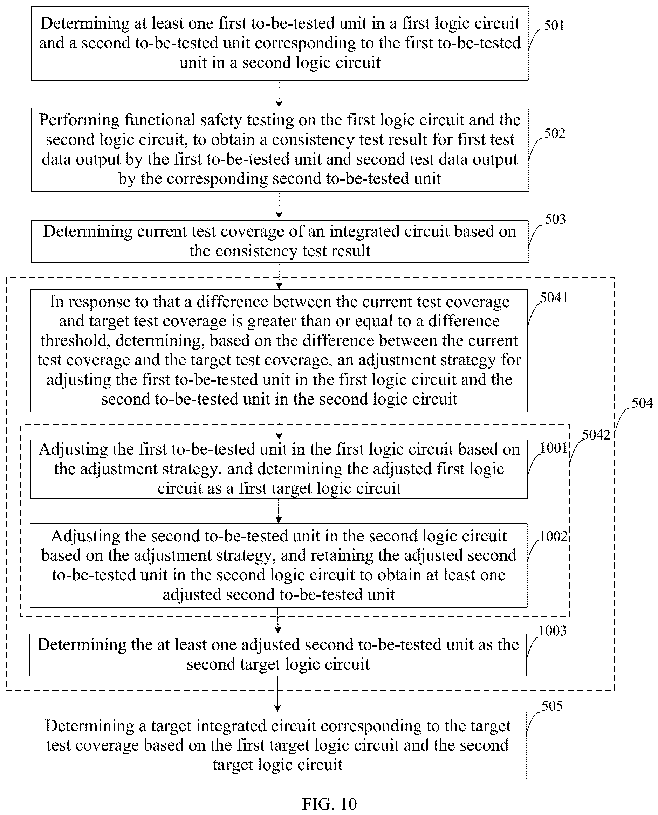

As shown in FIG. 10, on the basis of the embodiments shown in FIG. 8, step 5042 may include the following steps 1001 to 1003.

Step 1001: Adjusting the first to-be-tested unit in the first logic circuit based on the adjustment strategy, and determining the adjusted first logic circuit as the first target logic circuit.

For example, taking that the first adjustment strategy in the adjustment strategy is to add the first to-be-tested unit in the first logic circuit as an example, as shown in FIG. 3 or FIG. 4, step 1001 may include: the test apparatus 32 adds the coupling between the third logic unit 113 (or the fourth logic unit 114) and the comparator 33 or the first hash generator 341 based on the first adjustment strategy; and uses the integrated circuit 11 to which the coupling between the third logic unit 113 (or the fourth logic unit 114) and the comparator 33 or the first hash generator 341 is added as the first target logic circuit.

Step 1002: Adjusting the second to-be-tested unit in the second logic circuit based on the adjustment strategy, and retaining the adjusted second to-be-tested unit in the second logic circuit to obtain at least one adjusted second to-be-tested unit.

For example, taking that the second adjustment strategy in the adjustment strategy is to increase the quantity of the second to-be-tested unit in the second logic circuit as an example, as shown in FIG. 3 or FIG. 4, step 1002 may include: the test apparatus 32 adds the coupling between the third replicated logic unit 123 (or the fourth replicated logic unit 124) and the comparator 33 or the second hash generator 342 based on the second adjustment strategy, to obtain the adjusted adjustable ratio logic circuit 31; and then removing the fourth replicated logic unit 124 (or the third replicated logic unit 123).

Step 1003: Determining the at least one adjusted second to-be-tested unit as the second target logic circuit.

For example, the second adjustment strategy specifically includes adding the coupling between the third replicated logic unit 123 and the comparator 33 or the second hash generator 342. As shown in FIG. 3 or FIG. 4, step 1003 may include: the test apparatus 32 determines a logic circuit of which the fourth replicated logic unit 124 is removed from the adjustable ratio logic circuit 31 as the second target logic circuit.

In the embodiments of this disclosure, when the adjustment strategy can enable the current test coverage and the target test coverage to meet a preset proportional relationship, the first logic circuit corresponding to the target test coverage can be obtained by adjusting the first to-be-tested unit in the first logic circuit based on the adjustment strategy; and the second target logic circuit corresponding to the target test coverage can be obtained by adjusting the second to-be-tested unit in the second logic circuit based on the adjustment strategy.

### Exemplary system

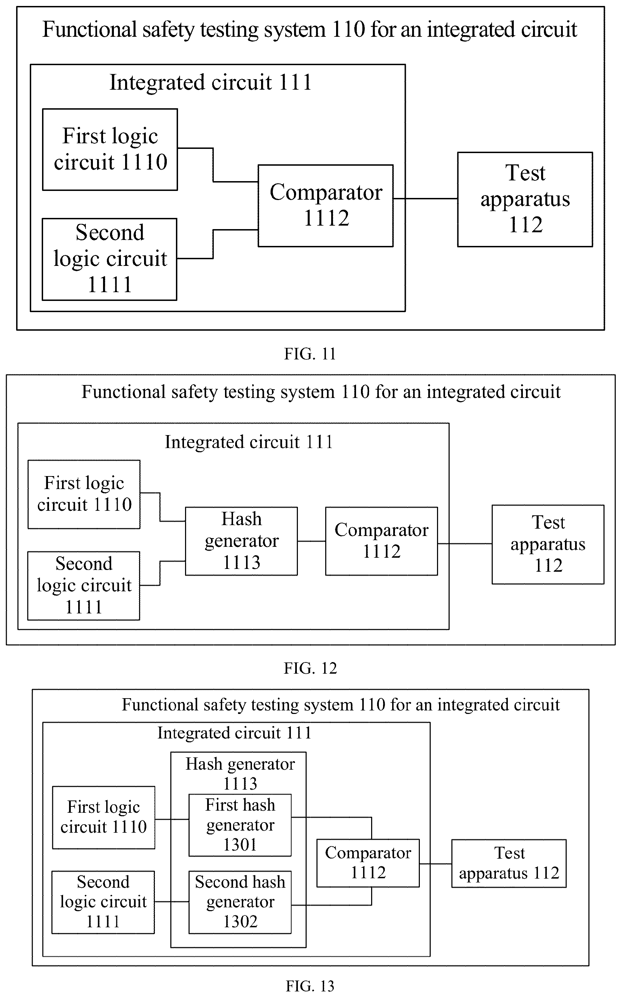

On the basis of the foregoing embodiments, an embodiment of this disclosure provides still another functional safety testing system for an integrated circuit. FIG. 11 is a schematic diagram of a structure of still another functional safety testing system for an integrated circuit according to an exemplary embodiment of this disclosure. As shown in FIG. 11, a functional safety testing system 110 for an integrated circuit includes an integrated circuit 111 and a test apparatus 112 for performing functional safety testing on the integrated circuit 111. The integrated circuit 111 includes a first logic circuit 1110, a second logic circuit 1111, and a comparator 1112.

The test apparatus 112 is configured to determine at least one first to-be-tested unit in the first logic circuit 1110 and a second to-be-tested unit corresponding to the first to-be-tested unit in the second logic circuit 1111.

The first logic circuit 1110 is coupled to the comparator 1112, and is configured to output first test data to the comparator 1112 based on the at least one first to-be-tested unit in the first logic circuit 1110.

The second logic circuit 1111 is coupled to the comparator 1112, and is configured to output second test data to the comparator 1112 based on at least one second to-be-tested unit in the second logic circuit 1111.

The comparator 1112 is coupled to the test apparatus 112, and is configured to output a consistency test result to the test apparatus 112 based on the first test data and the second test data.

The test apparatus 112 is configured to determine current test coverage of the integrated circuit 111 based on the consistency test result; adjust the first to-be-tested unit in the first logic circuit 1110 and the second to-be-tested unit in the second logic circuit 1111 in response to that the current test coverage and target test coverage do not meet a preset numerical relationship, to obtain a first target logic circuit and a second target logic circuit; and determine a target integrated circuit corresponding to the target test coverage based on the first target logic circuit and the second target logic circuit.

As shown in FIG. 12, on the basis of the embodiments shown in FIG. 10, the integrated circuit 111 may further include a hash generator 1113.

The hash generator 1113 is coupled to the first logic circuit 1110, the second logic circuit 1111, and the comparator 1112, and is configured to perform hash calculation on the first test data and the second test data respectively, to obtain a first hash value corresponding to the first test data and a second hash value corresponding to the second test data, and output the first hash value and the second hash value to the comparator 1112.

The comparator 1112 is configured to determine the consistency test result based on the first hash value and the second hash value.

As shown in FIG. 13, on the basis of the embodiments shown in FIG. 12, the hash generator 1113 includes a first hash generator 1301 and a second hash generator 1302.

The first hash generator 1301 is coupled to the first logic circuit 1110 and the comparator 1112, and is configured to perform hash calculation on the first test data, and output the obtained first hash value to the comparator 1112.

The second hash generator 1302 is coupled to the second logic circuit 1111 and the comparator 1112, and is configured to perform hash calculation on the second test data, and output the obtained second hash value to the comparator 1112.

### Exemplary apparatus

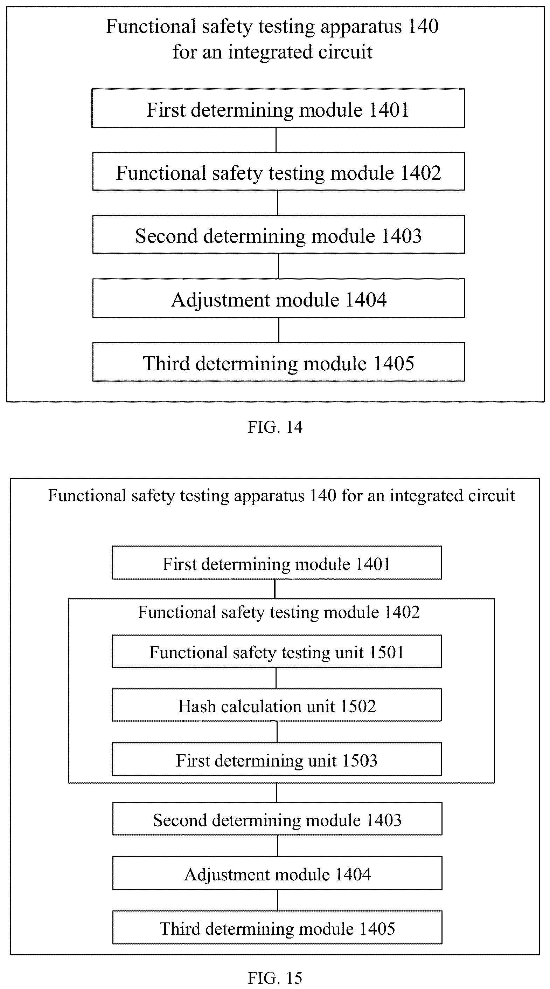

On the basis of the foregoing embodiments, an embodiment of this disclosure provides a functional safety testing apparatus for an integrated circuit. FIG. 14 is a schematic diagram of a structure of a functional safety testing apparatus for an integrated circuit according to an exemplary embodiment of this disclosure. The integrated circuit includes a first logic circuit and a second logic circuit for performing functional safety testing on the first logic circuit. As shown in FIG. 14, a functional safety testing apparatus 140 for an integrated circuit may include a first determining module 1401, a functional safety testing module 1402, a second determining module 1403, an adjustment module 1404, and a third determining module 1405.

The first determining module 1401 is configured to determine at least one first to-be-tested unit in the first logic circuit and a second to-be-tested unit corresponding to the first to-be-tested unit in the second logic circuit.

The functional safety testing module 1402 is configured to perform functional safety testing on the first logic circuit and the second logic circuit, to obtain a consistency test result for first test data output by the first to-be-tested unit and second test data output by the corresponding second to-be-tested unit.

The second determining module 1403 is configured to determine current test coverage of the integrated circuit based on the consistency test result.

The adjustment module 1404 is configured to adjust the first to-be-tested unit in the first logic circuit and the second to-be-tested unit in the second logic circuit in response to that the current test coverage and target test coverage do not meet a preset numerical relationship, to obtain a first target logic circuit and a second target logic circuit.

The third determining module 1405 is configured to determine a target integrated circuit corresponding to the target test coverage based on the first target logic circuit and the second target logic circuit.

As shown in FIG. 15, on the basis of the embodiment shown in FIG. 14, the functional safety testing module 1402 may include a functional safety testing unit 1501, a hash calculation unit 1502, and a first determining unit 1503.

The functional safety testing unit 1501 is configured to perform functional safety testing on the first logic circuit and the second logic circuit to obtain the first test data and the second test data.

The hash calculation unit 1502 is configured to perform hash calculation on the first test data and the second test data respectively by a hash generator in the integrated circuit, to obtain a first hash value corresponding to the first test data and a second hash value corresponding to the second test data.

The first determining unit 1503 is configured to determine the consistency test result based on the first hash value and the second hash value.

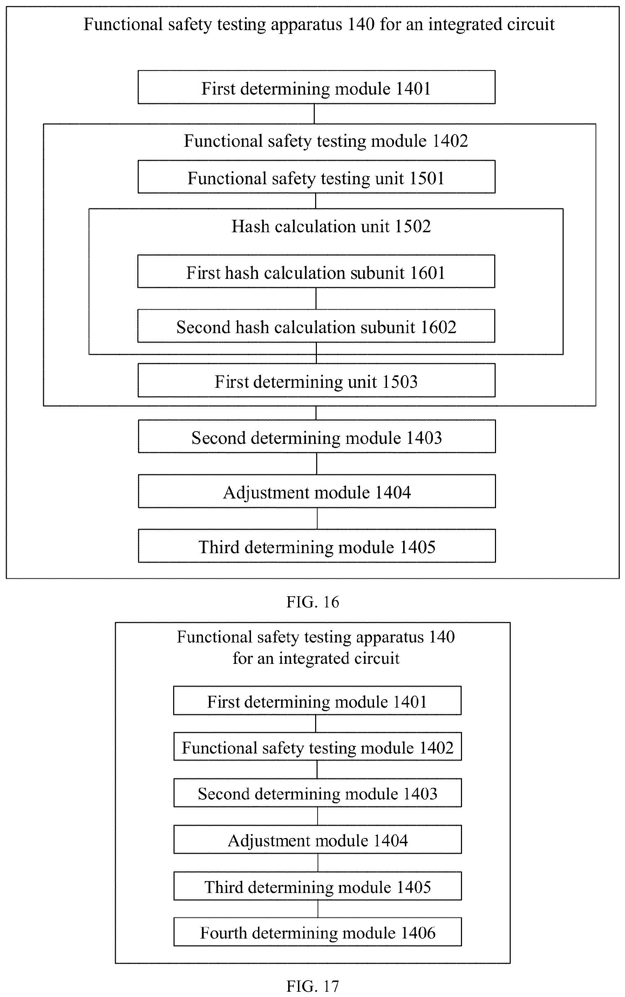

As shown in FIG. 16, on the basis of the embodiment shown in FIG. 15, the hash calculation unit 1502 includes a first hash calculation subunit 1601 and a second hash calculation subunit 1602.

The first hash calculation subunit 1601 is configured to perform hash calculation on the first test data by a first hash generator, to obtain the first hash value.

The second hash calculation subunit 1602 is configured to perform hash calculation on the second test data by a second hash generator, to obtain the second hash value.

The hash generator includes the first hash generator and the second hash generator.

As shown in FIG. 17, on the basis of the embodiment shown in FIG. 14, the functional safety testing apparatus 140 for an integrated circuit may further include a fourth determining module 1406.

The fourth determining module 1406 is configured to determine the target integrated circuit based on the first logic circuit and the second logic circuit in response to that the current test coverage and the target test coverage meet the preset numerical relationship.

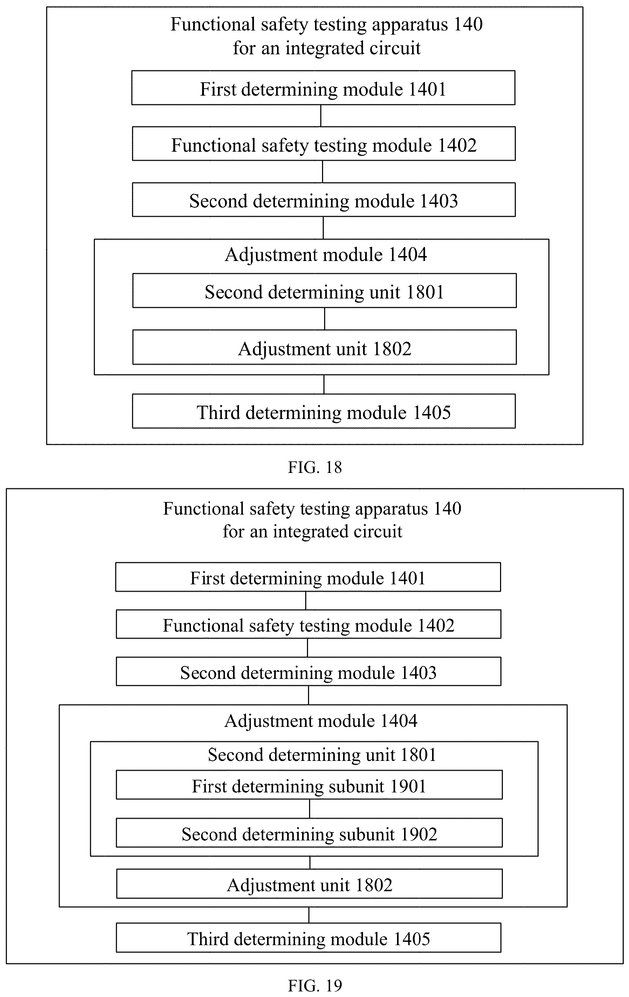

As shown in FIG. 18, on the basis of the embodiment shown in FIG. 14, the adjustment module 1404 may include a second determining unit 1801 and an adjustment unit 1802.

In response to that a difference between the current test coverage and the target test coverage is greater than or equal to a difference threshold, the second determining unit 1801 is configured to determine, based on the difference, an adjustment strategy for adjusting the first to-be-tested unit in the first logic circuit and the second to-be-tested unit in the second logic circuit.

The adjustment unit 1802 is configured to adjust the first to-be-tested unit in the first logic circuit and the second to-be-tested unit in the second logic circuit based on the adjustment strategy, to obtain the first target logic circuit and the second target logic circuit.

As shown in FIG. 19, on the basis of the embodiment shown in FIG. 18, the second determining unit 1801 includes a first determining subunit 1901 and a second determining subunit 1902.

The first determining subunit 1901 is configured to determine, in response to that the difference is greater than a first threshold, that the adjustment strategy is to reduce quantities of the first to-be-tested unit in the first logic circuit and the second to-be-tested unit in the second logic circuit.

The second determining subunit 1902 is configured to determine, in response to that the difference is less than a second threshold, that the adjustment strategy is to increase the quantities of the first to-be-tested unit in the first logic circuit and the second to-be-tested unit in the second logic circuit.

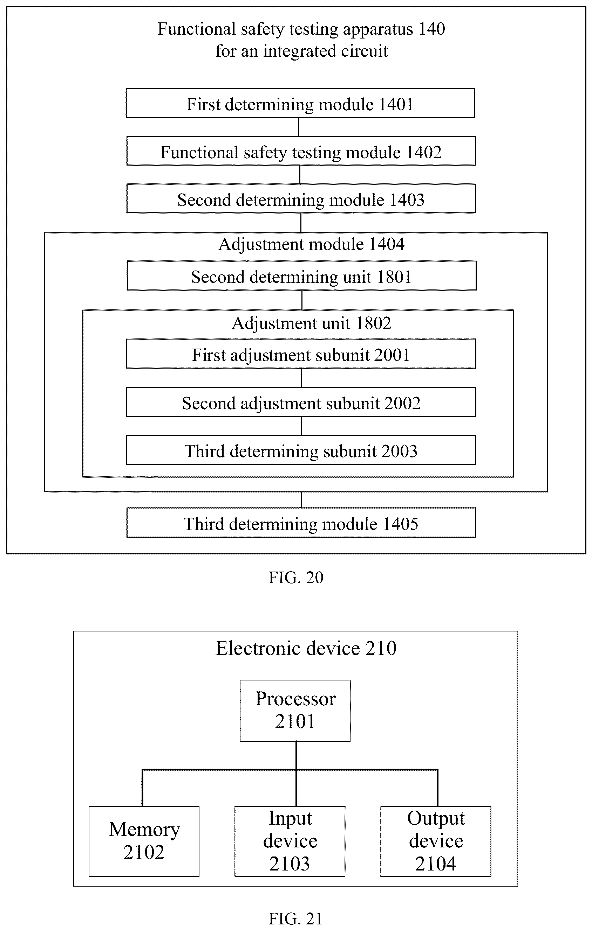

As shown in FIG. 20, on the basis of the embodiment shown in FIG. 18, the adjustment unit 1802 may include a first adjustment subunit 2001, a second adjustment subunit 2002, and a third determining subunit 2003.

The first adjustment subunit 2001 is configured to adjust the first to-be-tested unit in the first logic circuit based on the adjustment strategy, and determine the adjusted first logic circuit as the first target logic circuit.

The second adjustment subunit 2002 is configured to adjust the second to-be-tested unit in the second logic circuit based on the adjustment strategy, and retain the adjusted second to-be-tested unit in the second logic circuit to obtain at least one adjusted second to-be-tested unit.

The third determining subunit 2003 is configured to determine the at least one adjusted second to-be-tested unit as the second target logic circuit.

### Exemplary electronic device

FIG. 21 is a schematic diagram of a structure of an electronic device according to an exemplary embodiment of this disclosure. As shown in FIG. 21, an electronic device 210 includes one or more processors 2101 and a memory 2102.

The processor 2101 may be a central processing unit (CPU) or another form of processing unit having a data processing capability and/or an instruction execution capability, and may control other components in the electronic device 210 to implement desired functions.

The memory 2102 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 2101 may execute the program instruction to implement the functional safety testing method for an integrated circuit according to various embodiments of this disclosure that are described above and/or other desired functions.

In an example, the electronic device 210 may further include an input device 2103 and an output device 2104. These components are connected to each other through a bus system and/or another form of connection mechanism (not shown).

Certainly, for simplicity, FIG. 21 shows only some of components in the electronic device 210 that are related to this disclosure, and components such as a bus and an input/output interface are omitted. In addition, according to specific application situations, the electronic device 210 may further include any other appropriate components.

### Exemplary computer program product and computer readable storage medium

In addition to the foregoing method and device, embodiments of this disclosure may also relate to a computer program product, which includes computer program instructions. When the computer program instructions are run by a processor, the processor is enabled to perform the steps, of the functional safety testing method for an integrated circuit according to the embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the functional safety testing method for an integrated circuit according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A functional safety testing method for an integrated circuit, wherein the integrated circuit comprises a first logic circuit and a second logic circuit for performing functional safety testing on the first logic circuit, and the method comprises:
determining at least one first to-be-tested unit in the first logic circuit and a second to-be-tested unit corresponding to the first to-be-tested unit in the second logic circuit;
performing functional safety testing on the first logic circuit and the second logic circuit, to obtain a consistency test result for first test data output by the first to-be-tested unit and second test data output by the corresponding second to-be-tested unit;
determining current test coverage of the integrated circuit based on the consistency test result;
adjusting the first to-be-tested unit in the first logic circuit and the second to-be-tested unit in the second logic circuit in response to that the current test coverage and target test coverage do not meet a preset numerical relationship, to obtain a first target logic circuit and a second target logic circuit; and
determining a target integrated circuit corresponding to the target test coverage based on the first target logic circuit and the second target logic circuit.

2. The method according to claim 1, wherein the performing functional safety testing on the first logic circuit and the second logic circuit, to obtain a consistency test result for first test data output by the first to-be-tested unit and second test data output by the corresponding second to-be-tested unit comprises:
performing functional safety testing on the first logic circuit and the second logic circuit to obtain the first test data and the second test data;
performing hash calculation on the first test data and the second test data respectively by a hash generator in the integrated circuit, to obtain a first hash value corresponding to the first test data and a second hash value corresponding to the second test data; and
determining the consistency test result based on the first hash value and the second hash value.

3. The method according to claim 2, wherein the performing hash calculation on the first test data and the second test data respectively by a hash generator in the integrated circuit, to obtain a first hash value and a second hash value comprises:
performing hash calculation on the first test data by a first hash generator, to obtain the first hash value; and
performing hash calculation on the second test data by a second hash generator, to obtain the second hash value, wherein the hash generator comprises the first hash generator and the second hash generator.

4. The method according to claim 1, wherein the method further comprises:
determining the target integrated circuit based on the first logic circuit and the second logic circuit in response to that the current test coverage and the target test coverage meet the preset numerical relationship.

5. The method according to any one of claims 1 to 4, wherein the adjusting the first to-be-tested unit in the first logic circuit and the second to-be-tested unit in the second logic circuit in response to that the current test coverage and target test coverage do not meet a preset numerical relationship, to obtain a first target logic circuit and a second target logic circuit comprises:
in response to that a difference between the current test coverage and the target test coverage is greater than or equal to a difference threshold, determining, based on the difference, an adjustment strategy for adjusting the first to-be-tested unit in the first logic circuit and the second to-be-tested unit in the second logic circuit; and
adjusting the first to-be-tested unit in the first logic circuit and the second to-be-tested unit in the second logic circuit based on the adjustment strategy, to obtain the first target logic circuit and the second target logic circuit.

6. The method according to claim 5, wherein the determining, based on the difference, an adjustment strategy for adjusting the first to-be-tested unit in the first logic circuit and the second to-be-tested unit in the second logic circuit comprises:
in response to that the difference is greater than a first threshold, determining that the adjustment strategy is to reduce quantities of the first to-be-tested unit in the first logic circuit and the second to-be-tested unit in the second logic circuit; and
in response to that the difference is less than a second threshold, determining that the adjustment strategy is to increase the quantities of the first to-be-tested unit in the first logic circuit and the second to-be-tested unit in the second logic circuit.

7. The method according to claim 5, wherein the adjusting the first to-be-tested unit in the first logic circuit and the second to-be-tested unit in the second logic circuit based on the adjustment strategy, to obtain the first target logic circuit and the second target logic circuit comprises:
adjusting the first to-be-tested unit in the first logic circuit based on the adjustment strategy, and determining the adjusted first logic circuit as the first target logic circuit;
adjusting the second to-be-tested unit in the second logic circuit based on the adjustment strategy, and retaining the adjusted second to-be-tested unit in the second logic circuit to obtain at least one adjusted second to-be-tested unit; and
determining the at least one adjusted second to-be-tested unit as the second target logic circuit.

8. A functional safety testing system for an integrated circuit, comprising an integrated circuit and a test apparatus for performing functional safety testing on the integrated circuit, wherein the integrated circuit comprises a first logic circuit, a second logic circuit, and a comparator;
the test apparatus is configured to determine at least one first to-be-tested unit in the first logic circuit and a second to-be-tested unit corresponding to the first to-be-tested unit in the second logic circuit;
the first logic circuit is coupled to the comparator, and is configured to output first test data to the comparator based on the at least one first to-be-tested unit in the first logic circuit;
the second logic circuit is coupled to the comparator, and is configured to output second test data to the comparator based on at least one second to-be-tested unit in the second logic circuit;
the comparator is coupled to the test apparatus, and is configured to output a consistency test result to the test apparatus based on the first test data and the second test data; and
the test apparatus is configured to determine current test coverage of the integrated circuit based on the consistency test result; adjust the first to-be-tested unit in the first logic circuit and the second to-be-tested unit in the second logic circuit in response to that the current test coverage and target test coverage do not meet a preset numerical relationship, to obtain a first target logic circuit and a second target logic circuit; and determine a target integrated circuit corresponding to the target test coverage based on the first target logic circuit and the second target logic circuit.

9. The system according to claim 8, wherein the integrated circuit further comprises a hash generator;
the hash generator is coupled to the first logic circuit, the second logic circuit, and the comparator, and is configured to perform hash calculation on the first test data and the second test data respectively, to obtain a first hash value corresponding to the first test data and a second hash value corresponding to the second test data, and output the first hash value and the second hash value to the comparator; and
the comparator is configured to determine the consistency test result based on the first hash value and the second hash value.

10. The system according to claim 9, wherein the hash generator comprises a first hash generator and a second hash generator;
the first hash generator is coupled to the first logic circuit and the comparator, and is configured to perform hash calculation on the first test data, and output the obtained first hash value to the comparator; and
the second hash generator is coupled to the second logic circuit and the comparator, and is configured to perform hash calculation on the second test data, and output the obtained second hash value to the comparator.

11. A functional safety testing apparatus for an integrated circuit, wherein the integrated circuit comprises a first logic circuit and a second logic circuit for performing functional safety testing on the first logic circuit, and the functional safety testing apparatus comprises:
a first determining module, configured to determine at least one first to-be-tested unit in the first logic circuit and a second to-be-tested unit corresponding to the first to-be-tested unit in the second logic circuit;
a functional safety testing module, configured to perform functional safety testing on the first logic circuit and the second logic circuit, to obtain a consistency test result for first test data output by the first to-be-tested unit and second test data output by the corresponding second to-be-tested unit;
a second determining module, configured to determine current test coverage of the integrated circuit based on the consistency test result;
an adjustment module, configured to adjust the first to-be-tested unit in the first logic circuit and the second to-be-tested unit in the second logic circuit in response to that the current test coverage and target test coverage do not meet a preset numerical relationship, to obtain a first target logic circuit and a second target logic circuit; and
a third determining module, configured to determine a target integrated circuit corresponding to the target test coverage based on the first target logic circuit and the second target logic circuit.

12. A computer readable storage medium, wherein the storage medium stores a computer program that, when executed by a processor, causes the processor to implement the functional safety testing method for an integrated circuit according to any one of claims 1 to 7.
